# EUROPÄISCHE PATENTSCHRIFT

(11) **EP 2 522 705 B1**
(45) Veröffentlichungstag und Bekanntmachung des Hinweises auf die Patenterteilung: **12.03.2014**
(21) Anmeldenummer: 12165337.2
(22) Anmeldetag: 24.04.2012
(51) Int. Cl.: C09J 7/02, C09J 7/04

(54) **Verwendung eines Klebebandes zum Ummanteln von langgestrecktem Gut wie insbesondere Kabelsätzen und langestrecktes Gut ummantelt mit einem Klebeband**
Use of an adhesive tape for sheathing elongated goods, in particular cable sets and elongated goods sheathed with a adhesive tape
Utilisation d'une bande de collage destinée à l'enrobage de marchandise allongée, comme notamment des ensemble de câbles et marchandise allongée enrobée d'une bande de collage

(30) Priorität: 03.05.2011 DE 102011075159
(43) Veröffentlichungstag der Anmeldung: 14.11.2012
(73) Patentinhaber: tesa SE, 20253 Hamburg (DE)
(72) Erfinder: Korthals, Brigitte Dr., 84489 Burghausen (DE); Seitzer, Dennis, 72764 Reutlingen (DE); Böhm, Nicolai Dr., 22559 Hamburg (DE); Mies, Michel, 20146 Hamburg (DE)

(56) Entgegenhaltungen:
- EP-A1- 1 580 245
- EP-A1- 2 298 846
- EP-A2- 1 342 763

## Beschreibung

Die Erfindung bezieht sich auf die Verwendung eines Klebebandes zum Ummanteln von langgestrecktem Gut wie insbesondere Kabelsätzen in Automobilen und Verfahren zur Ummantelung.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification). Im Folgenden werden diese Normen verkürzt mit LV 312 beziehungsweise mit Ford-Spezifikation bezeichnet.

Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312 beschrieben sind.

Kabelwickelbänder sind mit Folien- und Textilträger verbreitet, die in der Regel einseitig mit unterschiedlichen Haftklebemassen beschichtet sind.

Kabelwickelbänder müssen drei Hauptanforderungen erfüllen.
a. leichte Abwickelbarkeit:
   Das in Rollenform dargereichte Produkt muss für eine einfache Verarbeitung leicht abwickelbar sein.
b. Abflaggresistenz:
   Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.
   In der Praxis dürfen Klebebandenden sich nicht selbsttätig ablösen.
c. Kabelverträglichkeit:
   Die Kabelisolierung darf nicht durch den Einfluss des Klebebandes in Kombination mit erhöhter Temperatur über längeren Zeitraum verspröden. Unterschieden wird hier nach der LV 312 zwischen vier Temperaturklassen T1 bis T4, entsprechend 80 °C (auch Temperaturklasse A genannt), 105 °C (auch Temperaturklasse B(105) genannt), 125 °C (auch Temperaturklasse C genannt) und 150 °C (auch Temperaturklasse D genannt), denen die umwickelten Kabel ohne Versprödung über 3000 h standhalten müssen. Es versteht sich von selbst, dass die Temperaturklassen T3 und T4 höhere Ansprüche an das Klebeband stellen als die unteren Klassen T1 und T2. Über die Einstufung T1 bis T4 entscheidet sowohl das Kabelisolierungsmaterial, als auch Haftklebemasse und Trägertyp.

Kabelwickelbänder mit Haftklebemassen auf Basis von Naturkautschuk zeigen zumeist eine gute Abflaggresistenz, weisen jedoch eine über die Lagerzeit, und vor allem bei zunehmenden Temperaturen ansteigende Abrollkraft auf. Zudem erfüllen sie nur die unteren Temperaturklassen für die Kabelverträglichkeit.
Ähnlich verhalten sich Klebebänder auf Basis von Synthesekautschuken (Styrolblockcopolymere) wie SBS/SIS. Selbst die hydrierten Typen sind in der Temperaturklasse beschränkt.

Weiterhin findet man Kabelwickelbänder mit Haftklebemassen auf Basis von UVvernetzbaren Polyacrylsäureestern. Diese erfüllen die hohen Temperaturklassen, neigen aber zum Abflaggen.

Im Zusammenhang mit Klebebändern zur Kabelummantelung sind drei Zitate in der Patentliteratur bekannt, in denen Acrylate in Form von Polymerdispersionen erwähnt werden:

Die EP 1 132 927 B1 umfasst die Verwendung von Acrylatmassen in Bandagierungsbändern für Kabel unter der hier auch gültigen Randbedingung der Kabelverträglichkeit. Es wird zwar ausdrücklich ein Acrylatcompound erwähnt, der als wässriges System beschichtet werden kann. In der Beschreibung ist erwähnt, dass unter Compounds verarbeitungsfertige Mischungen aus Polymeren mit den entsprechenden Additiven zu verstehen sind. Es fehlt allerdings der konkrete Hinweis, dass mit Additiven auch Harze gemeint sind.
Im Gegenteil: Es ist sogar erwähnt, dass die Temperaturbeständigkeit des Klebebandes unter anderem gerade durch die Abwesenheit von Harzen erreicht wird.

Nach EP 0 994 169 B1 ist die Vernetzung zur Erzielung ausreichender Kohäsion (hier im Sinne von Chemikalienbeständigkeit) häufig notwendig. Diese wiederum führt in der Regel zu einer Verringerung von Klebkraft und Tack (die so genannte Anfassklebrigkeit). Die Lösung besteht in einem Verfahren zur Herstellung von Klebebändern durch strahlenchemische Vernetzung, die eine gute Kohäsion bei gleichbleibend hoher Klebkraft bewirkt. Die Klebmassen können auch harzabgemischte Acrylate aus Dispersion sein, Einschränkungen hinsichtlich der Copolymerzusammensetzung werden nicht gemacht.

Die DE 44 19 169 A1 beschreibt ein flammgeschütztes Band für die Kabelummantelung, bei dem sowohl der Träger als auch die Klebmasse Flammschutzmittel enthalten. In Beispiel 1 wird ausdrücklich eine Klebemasse aus den Rohstoffen Primal PS 83 D, ein Dispersionsacrylat, Snowtack SE 380 A, ein Dispersionsharz, und Flammschutzmittel gemischt.

Der vorliegenden Erfindung liegt die Aufgabe zugrunde, ein Klebeband zur Verfügung zu stellen, das trotz leichter Abwickelbarkeit eine gute Abflaggresistenz hat und zugleich eine Kabelverträglichkeit über alle genannten Temperaturklassen aufweist und das das besonders einfache, preiswerte und schnelle Ummanteln von langgestrecktem Gut wie Kabelsätzen in Automobilen ermöglicht.

Gelöst wird diese Aufgabe durch ein Klebeband, wie es im Hauptanspruch niedergelegt ist. Gegenstand der Unteransprüche sind dabei vorteilhafte Weiterbildungen des Klebebands und Verfahren zur Anwendung des Klebebands.

Demgemäß betrifft die Erfindung die Verwendung eines Klebebandes insbesondere zum Umwickeln von Kabeln, bestehend aus einem vorzugsweise textilen Träger und aus einer auf mindestens einer Seite des Trägers aufgebrachten Haftklebemasse in Form einer getrockneten Polymerdispersion, wobei das Polymer aufgebaut ist aus:
(a) 90 bis 99 Gew.-% n-Butylacrylat und/oder 2-Ethylhexylacrylat
(b) 0 bis 10 Gew.-% eines ethylenisch ungesättigten Monomers mit einer Säure- oder Säureanhydridfunktion
(c) 10 bis 1 Gew.-% eines oder mehreren von (a) und (b) verschiedenen ethylenisch ungesättigten monofunktionellen Monomeren, wobei Acrylnitril und/oder Methacrylnitril das Monomer (c) oder zumindest einen Teil der Monomere (c) bilden
(d) 0 bis 1 Gew.-% eines di- oder mehrfunktionellen Monomers
und die Haftklebemasse zwischen 15 und 100 Gewichtsteile eines Klebrigmachers (bezogen auf die Masse der getrockneten Polymerdispersion) enthält.

Die Klebemasse ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Acrylnitril und/oder Methacrylnitril bilden das Monomer (c) oder zumindest einen Teil der Monomere (c), bevorzugt Acrylnitril.

Bevorzugt bildet 2-Ethylhexylacrylat Monomer (a).

Gemäß einer weiteren bevorzugten Ausführungsform besteht das Monomer (a) aus 2-Ethylhexylacrylat und gleichzeitig das Monomer (c) oder zumindest ein Teil der Monomere (c) aus Acrylnitril und/oder Methacrylnitril, vorzugsweise aus Acrylnitril.
Eine besonders bevorzugte Ausführungsform der Erfindung umfasst also eine Mischung aus 2-Ethylhexylacrylat als Monomer (a) und Acrylnitril als Monomer (c).

Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt sind Acrylsäure oder Methacrylsäure, gegebenenfalls die Mischung aus beiden.

Unter Monomere (c) fallen auch Alkyl(meth)acrylate, bevorzugt C₁- bis C₂₀-Alkyl(meth)acrylate mit Ausnahme der (a) bildenden Monomere, aromatische Vinylmonomere wie Styrol, α-Methylstyrol und Vinyltoluol, C₁- bis C₁₀-Hydroxyalkyl(meth)acrylate wie insbesondere Hydroxyethyl- oder Hydroxypropyl(meth)acrylat, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen.
Erfindungsgemäß besonders bevorzugt ist Acrylnitril.

Beispiele für mehrfunktionale ethylenisch ungesättigte Monomere (d) sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Die Polymerdispersion wird hergestellt durch das Verfahren der Emulsionspolymerisation der genannten Komponenten. Beschreibungen dieses Verfahrens werden zum Beispiel gegeben in "Emulsion Polymerization and Emulsion Polymers" von Peter A. Lovell and Mohamed S. EI-Aasser - Wiley-VCH 1997 - ISBN 0-471-96746-7 oder in EP 1 378 527 B1.

Zur Erzielung haftklebriger Eigenschaften muss sich die Klebmasse bei der Verarbeitungstemperatur oberhalb ihrer Glastemperatur befinden, um viskoelastische Eigenschaften zu haben. Da die Kabelsatzwicklung bei normaler Umgebungstemperatur (ungefähr zwischen 15 °C bis 25 °C) erfolgt, liegt die Glasübergangstemperatur der Haftklebemasseformulierung (Polymer-Klebrigmachermischung) bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen (vgl. T.G. Fox, Bull. Am. Phys. Soc. 1 (1956) 123). Durch die Klebrigmacher erhöht sich die Glasübergangstemperatur zwangsläufig, je nach Zugabemenge, Verträglichkeit und Erweichungstemperatur um ca. 5 bis 40 K. Es sind demnach nur Acrylatcopolymere mit einer Glasübergangstemperatur von höchstens 0 °C geeignet.

Bevorzugt werden weiterhin Polymere, die neben der erfindungsgemäßen Comonomerzusammensetzung nach ASTM D3330 eine Klebkraft auf Stahl von mindestens 1,0 N/cm aufweisen (bei einem Flächengewicht der Klebmasse von 30 g/m² auf 23 µm Polyesterfolie als Träger).

Beim Wickeln eines Kabelsatzes wird das Klebeband von gar nicht bis vollständig überlappend um das Kabel verklebt, das im Regelfall einen kleinen Radius hat, so dass das Klebeband sehr stark gekrümmt wird. Am Ende eines Wickelabschnittes wird üblicherweise das Band vorwiegend auf die eigene Rückseite gewickelt, so dass der Überlappungsgrad nahezu vollständig ist, ähnlich der üblichen Darreichungsform als Klebebandrolle, wo die Klebemasse ebenfalls auf der eigenen Rückseite verklebt ist. Beim Abflaggen wirken statische Kräfte wie zum Beispiel durch die Biegesteifigkeit des Trägers und die Wickelspannung, die dazu führen können, dass sich die offenen Klebebandenden in unerwünschter Weise aufstellen, ähnlich einer beginnenden selbsttätigen Abwicklung. Die Abflaggresistenz ist also die Fähigkeit der Klebmasse, dieser statischen Kraft zu widerstehen.
Die Polymerdispersion allein erfüllt die Anforderungen an ein Klebeband zum Umwickeln von Kabeln nicht. Insbesondere die geforderte Abflaggresistenz ist nicht ausreichend.

Der Einsatz von Klebrigmachern zur Steigerung der Klebkräfte von Haftklebemassen ist grundsätzlich bekannt. Es ist also für den Fachmann naheliegend, die Abflaggresistenz durch Verwendung von Klebrigmachern zu verbessern. Genau dieser Effekt wird beobachtet, wenn der Klebmasse üblicherweise 15 bis 100 Gewichtsteile Klebrigmacher (bezogen auf die Feststoffe) hinzugefügt wird, zumeist 20 bis 80 Gewichtsteile, weiter bevorzugt 30 bis 50 Gewichtsteile.

Für den Fachmann überraschend und nicht vorhersehbar führt der Einsatz von Klebharzen beim erfindungsgemäßen Klebeband nicht gleichzeitig zu einer schwierigen Abwickelbarkeit, obwohl beiden Anforderungen gemein ist, dass die Haftklebemasse Kontakt zur eigenen Rückseite hat.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze. Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und/oder Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Eine besonders bevorzugte Ausführungsform der Erfindung umfasst also eine Mischung aus 2-Ethylhexylacrylat als Monomer (a) sowie Acrylnitril als Monomer (c) und Terpenphenolen und/oder Kolophoniumestern mit einem Erweichungspunkt oberhalb von 90 °C gemäß ASTM E28-99 (2009).

Zur weiteren Verbesserung der Kabelverträglichkeit kann die Klebmasseformulierung optional mit Lichtschutz- oder primären und/oder sekundären Alterungsschutzmitteln abgemischt sein.
Als Alterungsschutzmittel können Produkte auf Basis sterisch gehinderter Phenole, Phosphite, Thiosynergisten, sterisch gehinderter Amine oder UV-Absorber eingesetzt werden.
Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.
Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelaton auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten. Die Menge des zugesetzten Alterungsschutzmittels bzw. Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Bevorzugt ist die Darreichungsform in Form einer Dispersion zur besonders einfachen Mischbarkeit mit der Klebmassedispersion. Alternativ können flüssige Alterungsschutzmittel auch direkt in die Dispersion eingearbeitet werden, wobei sich an den Einarbeitungsschritt noch eine Standzeit über einige Stunden anschließen sollte, um die homogene Verteilung in der Dispersion oder die Aufnahme des Alterungsschutzmittels in die Dispersionspartikel zu ermöglichen. Eine weitere Alternative ist die Zugabe einer organischen Lösung der Alterungsschutzmittel in die Dispersion. Geeignete Konzentrationen liegen im Bereich von 0,1 bis zu 5 Gewichtsteilen bezogen auf die Feststoffe.

Zur Verbesserung der Verarbeitungseigenschaften kann die Klebmasseformulierung weiterhin mit üblichen Prozesshilfsmitteln wie Rheologieadditiven (Verdicker), Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe.

In einer bevorzugten Ausführungsform hat die erfindungsgemäße Klebmasseformulierung nach ASTM D3330 eine Klebkraft auf Stahl von mindestens 2,5 N/cm (bei einem Flächengewicht der Klebmasse von ca. 100 g/m² auf Polyestergewebe als Träger gemäß den Beispielen).

Als Träger eignen sich prinzipiell alle Trägermaterialien, bevorzugt sind textile Träger und besonders bevorzugt Gewebe, insbesondere Polyestergewebe.

Als Trägermaterial für das Klebeband können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurch genadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inertem Gestein, wie zum Beispiel Sand, Kies oder dergleichen, vorhanden.
Die durch die Partikelschicht hindurch genadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird. Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch die Eindeckung einen sehr geringen Foggingwert.
Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.
Wenn die Umfangsgeschwindigkeit der Walzen differiert, dann wird der Träger zusätzlich glattgeschliffen.

Als Ausgangsmaterialien für das Trägermaterial für das Klebeband sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Trägers eingesetzt werden.
Des Weiteren sind Garne, gefertigt aus den angegebenen Fasern, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder nur aus Fäden aus natürlichen Rohstoffen bestehen, also sortenrein sein.

Es eignet sich auch ein Trägermaterial für das Klebeband, das aus Papier, aus einem Laminat, aus einer Folie (zum Beispiel PP, PE, PET, PA, PU), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen: mit Polyurethanen, Copolymeren aus Polyolefinen lassen sich beispielsweise flexible und elastische Ummantelungen erzeugen, mit Polyester und Polyamiden werden gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden.
Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.
Bevorzugt ist die Klebemasse vollflächig auf dem Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.
Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.
Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.
Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.
Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.
Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Der Herstellprozess des erfindungsgemäßen Klebebandes erschöpft sich in der Beschichtung des Trägers direkt mit der Dispersion in einem oder mehreren nacheinander durchgeführten Arbeitsgängen. Im Falle von textilen Trägern kann das unbehandelte Textil direkt oder im Transferverfahren beschichtet werden. Alternativ kann das Textil mit einer Beschichtung vorbehandelt werden (mit beliebigem filmbildendem Stoff aus Lösung, Dispersion, Schmelze und/oder strahlenhärtend), um dann in einem nachgeschalteten Arbeitsschritt direkt oder im Transferverfahren mit der Haftklebemasse versehen zu werden.
Als Auftragsaggregate werden die üblichen eingesetzt: Drahtrakel, Streichbalken, Walzenauftrag, Düsenbeschichtung, Doppelkammerrakel, Mehrfachkaskadendüse.

Aufgrund der geschilderten positiven Eigenschaften lässt sich das Klebeband hervorragend zum Isolieren und Wickeln von Drähten oder Kabeln verwenden.

Des Weiteren ist es vorteilhaft zum Ummanteln von langgestrecktem Gut wie insbesondere Kabelsätze in Kraftfahrzeugen geeignet, wobei das Klebeband in einer Schraubenlinie um das langgestreckte Gut geführt oder das langgestreckte Gut in axialer Richtung von dem Band umhüllt werden kann.
Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.
Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.
Schließlich beschreiben die EP 1 315 781 A1 sowie die DE 103 29 994 A1 Ausführungsformen von Klebebändern, wie sie auch für das erfindungsgemäße Klebeband möglich sind.

Weiter vorzugsweise zerstört das Klebeband bei Verklebung auf Kabeln mit PVC-Ummantelung und auf Kabeln mit Polyolefin-Ummantelung dieselbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden.

Das erfindungsgemäße Klebeband eignet sich hervorragend für das Umwickeln von Kabeln, lässt sich für eine einfache Verarbeitung leicht abwickeln, zeigt kein oder nur geringfügiges Abflaggen und zeigt keine Kabelversprödung auch bei den hohen Temperaturklassen T3 und T4 über 3000 h.

Im Folgenden soll das Klebeband anhand mehrerer Figuren näher erläutert werden, ohne damit eine wie auch immer geartete Einschränkung hervorrufen zu wollen.

Es zeigen
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist, und
- Figur 3: eine vorteilhafte Anwendung des Klebebands.

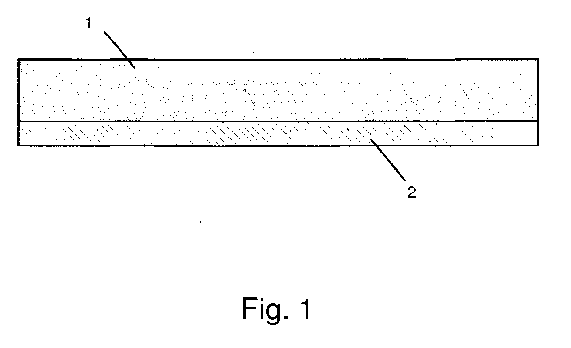

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 aufgebracht ist.

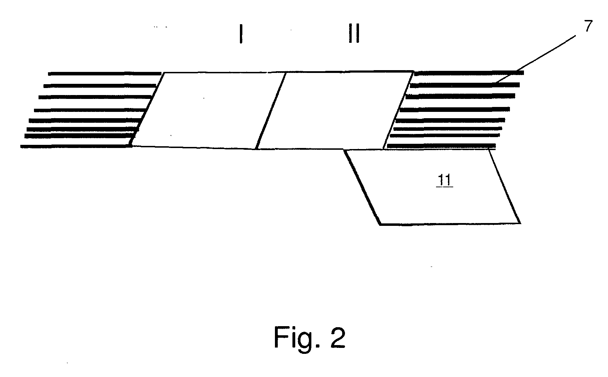

In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt.
Der gezeigte Ausschnitt des Kabelbaums zeigt zwei Wicklungen I und II des Klebebands. Nach links hin würden sich weitere Wicklungen erstrecken, diese sind hier nicht dargestellt.

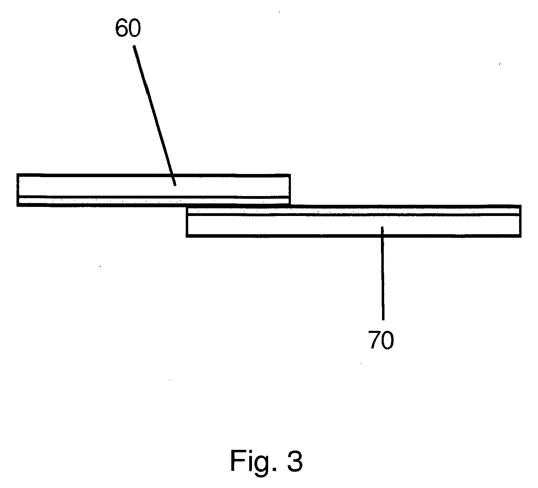

In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist.

### Beispiele

### Skizze der Beispiele

Das erfindungsgemäße Klebeband wird nachfolgend in bevorzugter Ausführung anhand mehrerer Beispiele beschrieben, ohne damit die Erfindung irgendeiner Beschränkung unterwerfen zu wollen.
Des Weiteren sind Vergleichsbeispiele aufgeführt, in denen untaugliche Klebebänder dargestellt sind.

Zur Erläuterung der Erfindung wurden Beispielklebebänder nach folgendem Schema hergestellt:
Die Haftklebstoffdispersionen wurden aus Polymer- und Harzdispersion entsprechend den Beispielrezepturen gemischt und mit einem Rührer innig homogenisiert. Anschließend wurden die Haftklebstoffdispersionen durch Einrühren eines Polyurethan-Assoziativverdickers (Borchigel 0625, OMG Borchers) auf eine Viskosität von ca. 5000 Pa*s bei einer Schergeschwindigkeit von 0,01 s⁻¹ eingestellt (gemessen mit Kegel/Platte Geometrie im Rotationsmodus mit einem Rheometer DSR 200 N von Rheometric Scientific).

Mit einem Filmziehgerät wurde ein Polyestergewebe (Feinheit der Faser 167 dtex, Fadenzahl Kette 48,5 1/cm, Fadenzahl Schuss 23 1/cm) so mit der verdickten Beispielhaftklebstoffdispersion bestrichen, dass nach dem Trocknen in einem Umluftofen bei 85 °C über 5 Minuten ein Klebmasseflächengewicht von ca. 20 g/m² resultierte.
Das in dieser Weise imprägnierte Gewebe wurde in einem zweiten Arbeitsschritt analog mit der gleichen Dispersion bestrichen, so dass nach dem Trocknen in einem Umluftofen bei 85 °C über 10 Minuten ein Klebmassegesamtflächengewicht von 100 g/m² resultierte.

### Beurteilungskriterien

Die Kriterien für ein anwendungsgerechtes Klebeband für die Umwicklung von Kabeln sind
- Abrollkraft von Rollen nach Lagerung bei 40 °C über 4 Wochen
- Abflaggresistenz gemäß dem TFT-Test
- Kabelverträglichkeit nach LV 312

### Durchführung der Tests

Die Messungen werden - soweit nicht ausdrücklich anders erwähnt - bei einem Prüfklima von 23 ± 1 °C und 50 ± 5 % rel. Luftfeuchte durchgeführt.

### Messung der Abrollkraft nach LV312

Dabei gilt ein Wert im Intervall von ca. 3 bis 9 N/cm bei einer Abzugsgeschwindigkeit von 30 m/min als anwendungsgerecht und wird mit "1" bewertet. Werte außerhalb erhalten die Note "0".

### Messung der Abflaggresistenz nach LV312 beziehungsweise TFT-Methode (Threshold Flagging Time)

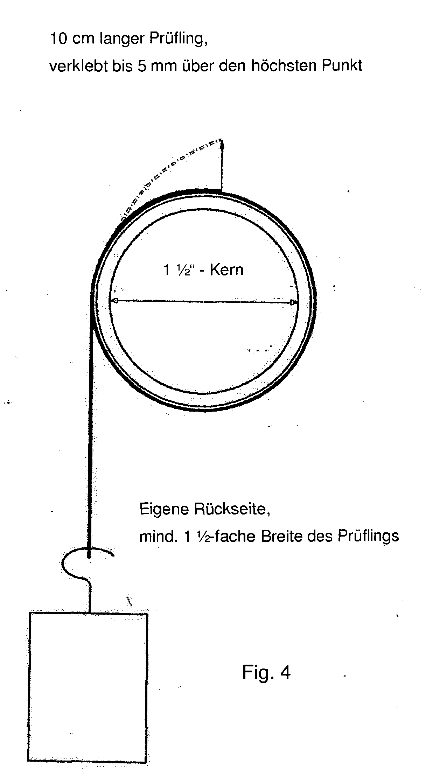

Zur Ermittlung des Flaggingverhaltens nach der TFT-Methode kommt ein Test zum Einsatz, bei dem durch die Applikation der flach präparierten Prüflinge auf einem 1½"-Kern eine zusätzliche Biegespannung erzeugt wird. Die Kombination aus Zugbelastung durch ein Prüfgewicht und Biegespannung bewirkt ein flagging-ähnliches Ablösen des Klebebandes vom verklebten oberen Ende her und ein letztendliches Versagen durch Abfallen der Prüflinge (siehe Figur 4, in der auch der schematische Aufbau gezeigt ist).

Die Zeit in Minuten bis zum Abfallen ist das Ergebnis.
Die ausschlaggebenden Parameter für die Haltezeit der Prüflinge sind Gewicht und Temperatur, wobei das Gewicht so zu wählen ist, dass sich Werte von mindestens 100 min ergeben.

Der zylindrisch geformte Prüfdorn ist 1½"-Pappkern mit 42 ± 2 mm Außendurchmesser, versehen mit einer Markierungslinie 5 mm neben der Scheitellinie.
Der Haftgrund ist die eigene Rückseite des Klebebands.
Der Handroller hat ein Gewicht von 2 kg.
Das Prüfgewicht beträgt 1 kg.
Das Prüfklima ist 23 ± 1 °C bei 50 ± 5 % rel. Feuchte beziehungsweise 40 °C im Wärmeschrank.

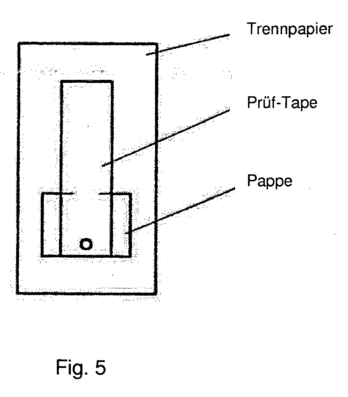

Die Prüfung erfolgt an Streifen von 19 mm breiten Klebebändern. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden.
Unter eines der Enden eines jeden Streifens wird ein Pappkärtchen geklebt und der Verbund gelocht (siehe Figur 5).

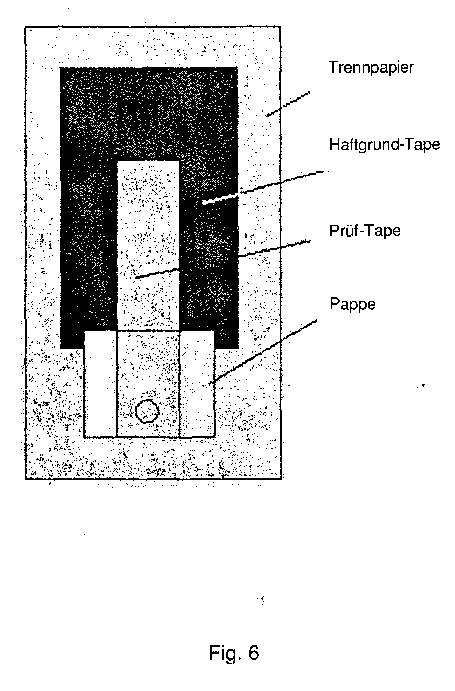

Die Prüfstreifen werden nun einzeln mittig auf Streifen des breiteren Haftgrunds (Klebeband in 1 ½-facher Breite des zu prüfenden Klebebands) verklebt, so dass das Pappkärtchen noch knapp (2 bis 3 mm) am Ende überlappt (siehe Figur 6).

Die Prüflinge werden mit dem 2 kg-Handroller in 3 Zyklen mit einer Geschwindigkeit von 10 m/min überrollt.

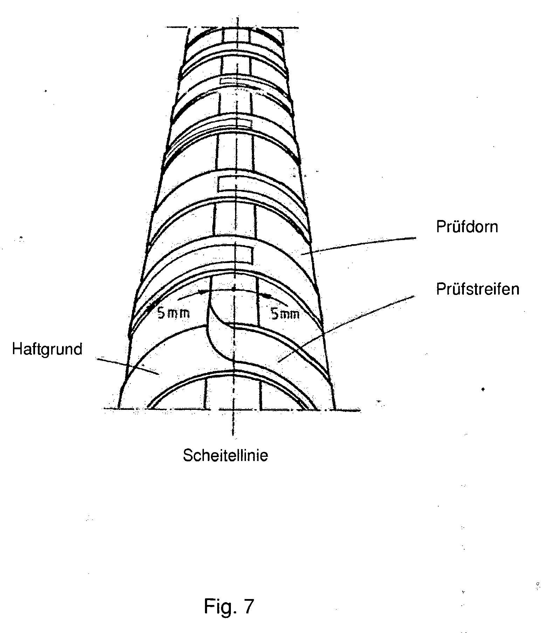

Die fertigen Prüfmuster, also die Prüfstreifen samt Haftgrund, werden nun so auf den Pappkern geklebt, dass das obere Ende des Prüflings den Scheitelpunkt um 5 mm überlappt (siehe Figur 7). Dabei darf nur der Haftgrund und nicht der Prüfling angedrückt werden.

Die fertig präparierten Prüflinge werden für 20 ± 4 Stunden ohne Gewichtsbelastung in einem Klimaraum bei 40 °C belassen.

Danach werden Gewichte mit einer Masse von einem Kilogramm angehängt und die Messuhren gestartet.
Die Messung endet nach Versagen aller drei Prüflinge eines Musters.

Der Median der drei Einzelmessungen wird in Minuten angegeben.

Die Haltezeit wird in Minuten angegeben.

Dabei gilt ein TFT-Wert von > 1200 Minuten als unterer Grenzwert bei der Resistenz gegen Abflaggen.
Werte darunter erhalten die Note 0, Werte von 1201 bis 2000 Minuten erhalten die Note 1, Werte von 2001 bis 5000 Minuten erhalten die Note 2 und Werte über 5001 Minuten erhalten die Note 3. In diesen Abstufungen spiegelt sich steigende Sicherheit gegen Abflaggen wider.

### Messung der Kabelverträglichkeit nach LV312

Dabei gilt ein Ausbleiben von Versprödung nach 3000 h bei 150 °C beim Biegen um einen Dorn mit Durchmesser 2 mm als kabelverträglich und wird mit der Note "1" bewertet. Werte außerhalb erhalten die Note "0".

### Messung der Klebkraft

Zur Messung der Klebkraft der reinen Dispersionen wurden zunächst Ausstriche der Klebmassen präpariert. Dazu wurden die Dispersionen auf eine PET-Folie (Polyethylenterephthalat) einer Dicke von 23 µm gegeben und mit einem Filmziehgerät so abgerakelt, dass nach dem Trocknen über 5 Minuten bei 105 °C in einem Umlufttrockenschrank ein Klebmasseflächengewicht von 30 g/m² resultierte.
Aus diesem Bogen wurden mit einem Cuttermesser Streifen von 20 mm Breite und 25 cm Länge herausgeschnitten.
Für die Messung der Klebkraft der Formulierungen mit Harz wurden wie oben beschrieben Ausstriche auf Polyestergewebe herangezogen und ebenfalls mit einem Cuttermesser in Streifen von 20 mm Breite und 25 cm Länge geschnitten.
Die Klebkraft auf Stahl wurde gemäß ASTM D3330 gemessen.

### Messung der Glasübergangstemperaturen

Die Glasübergangstemperaturen wurden auf dem Dynamischen Differenzkalorimeter-Gerät DSC 204 F1 "Phönix" der Firma Netzsch, Deutschland, in 25 µl Aluminiumtiegeln mit gelochtem Deckel unter Stickstoffatmosphäre (20 ml/min Gasfluss) bestimmt. Die Probeneinwaage betrug 8 ± 1 mg. Die Proben wurden zweimal von -140 °C bis auf 200 °C mit einer Heizrate von 10 K/min vermessen. Ausgewertet wurde die 2. Aufheizkurve.
Die Methode lehnt sich an die DIN 53 765 an.

### Zusammensetzung der Beispielpolymerdispersionen

Zur Verdeutlichung des Erfindungsgedankens wurden Polymerdispersionen mit folgender Comonomerzusammensetzung erprobt:

| **Monomer** | **Polymer 1** | **Polymer 2*** | **Polymer 3*** |
|---|---|---|---|
| 2-Ethylhexylacrylat | 93 | 92 | |
| Butylacrylat | | | 95 |
| Acrylsäure | 4 | 2 | 1 |
| Acrylnitril | 3 | - | - |
| Methylmethacrylat | - | 6 | - |
| Vinylacetat | - | - | 4 |

| | | | |
|---|---|---|---|
| * Vergleichspolymere | | | |

Die Klebkräfte auf Stahl der Polymere 1 bis 3 wurden wie folgt gemessen (Angabe in N/cm):

| **Polymer 1** | **Polymer 2*** | **Polymer 3*** |
|---|---|---|
| 2,8 | 1,4 | 1,9 |

| | | |
|---|---|---|
| * Vergleichspolymere | | |

Die Glasübergangstemperaturen der Polymere 1 bis 3 wurden wie folgt gemessen (Angabe in °C):

| **Polymer 1** | **Polymer 2*** | **Polymer 3*** |
|---|---|---|
| -47 | -48 | -36 |

| | | |
|---|---|---|
| * Vergleichspolymere | | |

Aus Polymer 1 wurden die in Tabelle 1 aufgeführten Haftklebemassen durch Abmischen mit Klebharzdispersionen formuliert. Dabei gibt die Zahl die Gewichtsteile an Klebrigmacher bezogen auf 100 Gewichtsteile Polymer 1 an (jeweils bezogen auf Feststoffe).

**Tabelle 1: Masseformulierungen aus Polymer 1**

| Klebrigmachertyp | Erweichungspunkt | Beispiele | | | Vergleichsbeispiele | | |
|---|---|---|---|---|---|---|---|
| | °C | **B1** | **B2** | **B3** | **V1** | **V2** | **V3** |
| Kolophoniumesterharz Snowtack 100G, Lawter | 99 | 45 | | | | 10 | |
| Kolophoniumesterharz Snowtack 780 G, Lawter | 83 | | 40 | | | | |
| Kolophoniumsäureharz Snowtack 781A*, Lawter | 69 | | | | 40 | | |
| Terpenphenolharz Dermulsene TR 602, DRT | 96 | | | 35 | | | |

| | | | | | | | |
|---|---|---|---|---|---|---|---|
| * Ehemalige Bezeichnung: Snowtack SE 380. | | | | | | | |

Als Beispiele **B4** und **B5** dienen die Polymere 2 und 3, jeweils abgemischt mit 40 Gewichtsteilen des Kolophoniumesterharzes Snowtack 100G mit einem Erweichungspunkt von 99 °C.

Gegenbeispiel **V4** ist die Acrylatdispersion Primal PS 83 D vom Hersteller Dow Chemical Company, abgemischt mit 8 Gewichtsteilen Snowtack 781A mit der ehemaligen Bezeichnung Snowtack SE 380. Dieses Beispiel bezieht sich auf das Beispiel 1 der DE 44 19 169 A1.

Die Klebkräfte auf Stahl der Beispiele B1 bis B5 sowie der Gegenbeispiele V1 bis V4 wurden wie folgt gemessen (Angabe in N/cm):

| **B1** | **B2** | **B3** | **B4*** | **B5*** | **V1** | **V2** | **V3** | **V4** |
|---|---|---|---|---|---|---|---|---|
| 4,6 | 4,3 | 3,9 | 3,8 | 3,4 | 2,2 | 1,9 | 1,8 | 2,1 |

| | | | | | | | | |
|---|---|---|---|---|---|---|---|---|
| * Vergleichsbeispiele | | | | | | | | |

Die Glasübergangstemperaturen der Haftklebeformulierungen der Beispiele B1 bis B5 sowie der Gegenbeispiele V1 bis V4 wurden wie folgt gemessen (Angabe in °C):

| **B1** | **B2** | **B3** | **B4*** | **B5*** | **V1** | **V2** | **V3** | **V4** |
|---|---|---|---|---|---|---|---|---|
| -26 | -29 | -33 | -25 | -16 | -32 | -39 | -47 | -37 |

| | | | | | | | | |
|---|---|---|---|---|---|---|---|---|
| * Vergleichsbeispiele | | | | | | | | |

In Tabelle 3 sind die Prüfergebnisse der Beispielmuster dargestellt:

**Tabelle 3**

| | **Beispiele** | | | | | **Vergleichsbeispiele** | | | |
|---|---|---|---|---|---|---|---|---|---|
| | **B1** | **B2** | **B3** | **B4*** | **B5*** | **V1** | **V2** | **V3** | **V4** |
| **Abrollkraft** | 1 | 1 | 1 | 1 | 1 | 1 | 1 | 1 | 1 |
| **Abflaggresistenz** | 3 | 2 | 3 | 1 | 2 | 0 | 0 | 0 | 0 |
| **Kabelverträglichkeit** | 1 | 1 | 1 | 1 | 1 | 1 | 1 | 1 | 1 |

| | | | | | | | | | |
|---|---|---|---|---|---|---|---|---|---|
| * Vergleichsbeispiele | | | | | | | | | |

Für ein anwendungsgerechtes Klebeband für die Kabelummantelung sind alle drei Prüfkriterien unabdingbar. Die Beispiele zeigen daher Klebebänder, die dem Erfindungsgedanken entsprechen, die Vergleichsbeispiele hingegen sind untauglich.

## Patentansprüche

1. Verwendung eines Klebebandes zum Ummanteln von langgestrecktem Gut, wobei das Klebeband in einer Schraubenlinie um das langgestreckte Gut geführt wird oder das langgestreckte Gut in axialer Richtung von dem Klebeband umhüllt wird, wobei das Klebeband besteht aus einem vorzugsweise textilen Träger und aus einer auf mindestens einer Seite des Trägers aufgebrachten Haftklebemasse in Form einer getrockneten Polymerdispersion, wobei das Polymer aufgebaut ist aus:
(a) 90 bis 99 Gew.-% n-Butylacrylat und/oder 2-Ethylhexylacrylat
(b) 0 bis 10 Gew.-% eines ethylenisch ungesättigten Monomers mit einer Säure-oder Säureanhydridfunktion
(c) 10 bis 1 Gew.-% eines oder mehreren von (a) und (b) verschiedenen ethylenisch ungesättigten monofunktionellen Monomeren, wobei Acrylnitril und/oder Methacrylnitril das Monomer (c) oder zumindest einen Teil der Monomere (c) bilden
(d) 0 bis 1 Gew.-% eines di- oder mehrfunktionellen Monomers
und die Haftklebemasse zwischen 15 und 100 Gewichtsteile eines Klebrigmachers (bezogen auf die Masse der getrockneten Polymerdispersion) enthält.

2. Verwendung nach Anspruch 1,
**dadurch gekennzeichnet, dass**
Acrylnitril das Monomer (c) oder zumindest einen Teil der Monomere (c) bildet.

3. Verwendung nach Anspruch 1 oder 2,
**dadurch gekennzeichnet, dass**
2-Ethylhexylacrylat Monomer (a) bildet.

4. Verwendung nach zumindest einem der Ansprüche 1 bis 3,
**dadurch gekennzeichnet, dass**
das Monomer (a) aus 2-Ethylhexylacrylat und gleichzeitig das Monomer (c) oder zumindest ein Teil der Monomere (c) aus Acrylnitril und/oder Methacrylnitril, vorzugsweise aus Acrylnitril, besteht.

5. Verwendung nach zumindest einem der vorherigen Ansprüche,
**dadurch gekennzeichnet, dass**
das Monomer (b) Acrylsäure, Methacrylsäure, Itaconsäure, Maleinsäure, Fumarsäure und/oder Maleinsäureanhydrid ist, bevorzugt Acrylsäure oder Methacrylsäure, oder die Mischung aus beiden.

6. Verwendung nach zumindest einem der vorherigen Ansprüche,
**dadurch gekennzeichnet, dass**
Monomer (d) Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat ist.

7. Verwendung nach zumindest einem der vorherigen Ansprüche,
**dadurch gekennzeichnet, dass**
20 bis 80 Gewichtsteile Klebrigmacher, weiter bevorzugt 30 bis 50 Gewichtsteile zugesetzt sind.

8. Verwendung nach zumindest einem der vorherigen Ansprüche,
**dadurch gekennzeichnet, dass**
als Klebrigmacher Klebharze mit einem Erweichungspunkt oberhalb von 80 °C gemäß ASTM E28-99 (2009), bevorzugt Harze auf Basis von Terpenphenolen und/oder Kolophoniumestern mit einem Erweichungspunkt oberhalb von 90 °C gemäß ASTM E28-99 (2009) eingesetzt werden.

9. Verwendung nach zumindest einem der vorherigen Ansprüche,
**dadurch gekennzeichnet, dass**
die Glasübergangstemperatur der Haftklebemasse unterhalb von +15 °C (ermittelt mit DSC (Differential Scanning Calorimetry) gemäß DIN 53 765 bei einer Aufheizrate von 10 K/min) liegt.

10. Verwendung nach zumindest einem der vorherigen Ansprüche,
**dadurch gekennzeichnet, dass**
die Haftklebemasse nach ASTM D3330 eine Klebkraft auf Stahl von mindestens 2,5 N/cm aufweist (bei einem Flächengewicht der Klebmasse von 100 g/m² auf Polyestergewebe als Träger).

11. Verwendung nach zumindest einem der vorherigen Ansprüche,
**dadurch gekennzeichnet, dass**
der Träger ein textiler Träger ist, bevorzugt ein Gewebe, insbesondere ein Polyestergewebe.

12. Langgestrecktes Gut, wie insbesondere ein Kabelsatz, ummantelt mit einem Klebeband nach zumindest einem der vorherigen Ansprüche.

## Claims

1. Use of an adhesive tape for jacketing elongate material, the adhesive tape being passed in a helical line around the elongate material or the elongate material being wrapped in axial direction by the adhesive tape, the adhesive tape consisting of a preferably textile carrier and of a pressure-sensitive adhesive which is applied on at least one side of the carrier and is in the form of a dried polymer dispersion, the polymer being synthesized from:
(a) 90% to 99% by weight of n-butyl acrylate and/or 2-ethylhexyl acrylate
(b) 0% to 10% by weight of an ethylenically unsaturated monomer having an acid or acid-anhydride function
(c) 10% to 1% by weight of one or more ethylenically unsaturated monofunctional monomers different from (a) and (b), where acrylonitrile and/or methacrylonitrile form the monomer (c) or at least part of the monomers (c)
(d) 0% to 1% by weight of a difunctional or polyfunctional monomer
and the pressure-sensitive adhesive comprising between 15 and 100 parts by weight of a tackifier (based on the mass of the dried polymer dispersion).

2. Use according to Claim 1,
**characterized in that**
acrylonitrile forms the monomer (c) or at least part of the monomers (c).

3. Use according to Claim 1 or 2,
**characterized in that**
2-ethylhexyl acrylate forms monomer (a).

4. Use according to at least one of Claims 1 to 3,
**characterized in that**
the monomer (a) consists of 2-ethylhexyl acrylate and at the same time the monomer (c) or at least part of the monomers (c) consists of acrylonitrile and/or methacrylonitrile, preferably of acrylonitrile.

5. Use according to at least one of the preceding claims,
**characterized in that**
the monomer (b) is acrylic acid, methacrylic acid, itaconic acid, maleic acid, fumaric acid and/or maleic anhydride, preferably acrylic acid or methacrylic acid, or the mixture of both.

6. Use according to at least one of the preceding claims,
**characterized in that**
monomer (d) is divinylbenzene, alkyl diacrylates such as 1,2-ethylene glycol diacrylate, 1,4-butanediol diacrylate, 1,6-hexanediol diacrylate, 1,8-octanediol diacrylate or 1,12-dodecanediol diacrylate, triacrylates such as trimethylolpropane triacrylate and tetraacrylates such as pentaerythritol tetraacrylate.

7. Use according to at least one of the preceding claims,
**characterized in that**
20 to 80 parts by weight of tackifiers, more preferably 30 to 50 parts by weight, have been added.

8. Use according to at least one of the preceding claims,
**characterized in that**
tackifiers used are tackifier resins having a softening point of more than 80°C in accordance with ASTM E28-99 (2009), preferably resins based on terpene phenols and/or rosin esters having a softening point of more than 90°C in accordance with ASTM E28-99 (2009).

9. Use according to at least one of the preceding claims,
**characterized in that**
the glass transition temperature of the pressure-sensitive adhesive is less than +15°C (determined by DSC (Differential Scanning Calorimetry) in accordance with DIN 53 765 with a heating rate of 10 K/min).

10. Use according to at least one of the preceding claims,
**characterized in that**
the pressure-sensitive adhesive according to ASTM D3330 has a bond strength to steel of at least 2.5 N/cm (for an adhesive coatweight of 100 g/m² on a woven polyester fabric carrier).

11. Use according to at least one of the preceding claims,
**characterized in that**
the carrier is a textile carrier, preferably a woven fabric, more particularly a woven polyester fabric.

12. Elongate material, such as more particularly a cable loom, jacketed with an adhesive tape according to at least one of the preceding claims.

## Revendications

1. Utilisation d'une bande adhésive pour envelopper un produit allongé, la bande adhésive étant guidée en hélice autour du produit allongé ou le produit allongé étant enveloppé dans le sens axial par la bande adhésive, la bande adhésive étant constituée par un support de préférence textile et par une masse autoadhésive appliquée sur au moins une face du support sous forme d'une dispersion de polymère séchée, le polymère étant formé à partir de :
(a) 90 à 99% en poids d'acrylate de n-butyle et/ou d'acrylate de 2-éthylhexyle
(b) 0 à 10% en poids d'au moins un monomère éthyléniquement insaturé présentant une fonction acide ou anhydride d'acide
(c) 10 à 1% en poids d'un ou de plusieurs monomères monofonctionnels éthyléniquement insaturés différents de (a) et (b), l'acrylonitrile et/ou le méthacrylonitrile formant le monomère (c) ou au moins une partie des monomères (c)
(d) 0 à 1% en poids d'un monomère difonctionnel ou polyfonctionnel
et la masse autoadhésive contenant entre 15 et 100 parties en poids d'un agent poisseux (par rapport à la masse de la dispersion de polymère séchée).

2. Utilisation selon la revendication 1, **caractérisée en ce que** l'acrylonitrile forme le monomère (c) ou au moins une partie des monomères (c).

3. Utilisation selon la revendication 1 ou 2, **caractérisée en ce que** l'acrylate de 2-éthylhexyle forme le monomère (a).

4. Utilisation selon au moins l'une quelconque des revendications 1 à 3, **caractérisée en ce que** le monomère (a) est constitué d'acrylate de 2-éthylhexyle et simultanément le monomère (c) ou au moins une partie des monomères (c) est constitué(e) d'acrylonitrile et/ou de méthacrylonitrile, de préférence d'acrylonitrile.

5. Utilisation selon au moins l'une quelconque des revendications précédentes, **caractérisée en ce que** le monomère (b) est l'acide acrylique, l'acide méthacrylique, l'acide itaconique, l'acide maléique, l'acide fumarique et/ou l'anhydride de l'acide maléique, de préférence l'acide acrylique ou l'acide méthacrylique ou le mélange des deux.

6. Utilisation selon au moins l'une quelconque des revendications précédentes, **caractérisée en ce que** le monomère (d) est le divinylbenzène, des diacrylates d'alkyle, tels que le diacrylate de 1,2-éthylèneglycol, le diacrylate de 1,4-butanediol, le diacrylate de 1,6-hexanediol, le diacrylate de 1,8-octanediol ou le diacrylate de 1,12-dodécanediol, des triacrylates tels que le triacrylate de triméthylolpropane et des tétraacrylates tels que le tétraacrylate de pentaérythritol.

7. Utilisation selon au moins l'une quelconque des revendications précédentes, **caractérisée en ce qu'**on ajoute 20 à 80 parties en poids d'agent poisseux, plus préférablement 30 à 50 parties en poids.

8. Utilisation selon au moins l'une quelconque des revendications précédentes, **caractérisée en ce qu'**on utilise comme agents poisseux des résines adhésives présentant un point de ramollissement supérieur à 80°C selon la norme ASTM E28-99 (2009), de préférence des résines à base de terpène-phénols et/ou d'esters de colophonium présentant un point de ramollissement supérieur à 90°C selon la norme ASTM E28-99 (2009).

9. Utilisation selon au moins l'une quelconque des revendications précédentes, **caractérisée en ce que** la température de transition vitreuse de la masse autoadhésive est inférieure à +15°C (déterminée par DSC (calorimétrique différentielle par balayage) selon la norme DIN 53 765 à une vitesse de chauffage de 10 K/min).

10. Utilisation selon au moins l'une quelconque des revendications précédentes, **caractérisée en ce que** la masse autoadhésive selon la norme ASTM D3330 présente une adhésivité sur l'acier d'au moins 2,5 N/cm (à un poids surfacique de la masse adhésive de 100 g/m² sur un tissu en polyester comme support).

11. Utilisation selon au moins l'une quelconque des revendications précédentes, **caractérisée en ce que** le support est un support textile, de préférence un tissu, en particulier un tissu en polyester.

12. Produit allongé, tel qu'en particulier un câblage, enveloppé par une bande adhésive selon au moins l'une quelconque des revendications précédentes.
